# EUROPÄISCHE PATENTSCHRIFT

(11) **EP 2 579 113 B1**
(45) Veröffentlichungstag und Bekanntmachung des Hinweises auf die Patenterteilung: **17.02.2021**
(21) Anmeldenummer: 11183684.7
(22) Anmeldetag: 03.10.2011
(51) Int. Cl.: G05B 15/02, G06F 8/20, H04L 12/28

(54) **Struktur eines Gebäudeautomationssystems**
Structure of a building automation system
Structure d'un système d'automatisation d'un bâtiment

(43) Veröffentlichungstag der Anmeldung: 10.04.2013
(73) Patentinhaber: Siemens Schweiz AG, 8047 Zürich (CH)
(72) Erfinder: Fehr, Andreas, 8004 Zürich (CH); Brun, Gerhard, 6006 Luzern (CH); Meier, Herbert, 6340 Baar (CH)
(74) Vertreter: Maier, Daniel Oliver

(56) Entgegenhaltungen:
- WO-A2-01/99078
- US-A1- 2007 055 759
- US-A1- 2011 071 685
- US-A1- 2011 087 650

## Beschreibung

### Technisches Gebiet der Erfindung

Ein Gebäudeautomationssystem ist eine Anordnung zur Überwachung, Steuerung und/oder Regelung von Prozessgrössen in komplexen technischen Systemen in einem Gebäude, oder in einem mehrere Gebäude umfassenden Areal. Ein Gebäudeautomationssystem bedient beispielhaft Heizungs-, Lüftungs- und Klimaanlagen, Beleuchtungs- und Beschattungseinrichtungen wie auch Zutritts- , Sicherheits- und Feuerüberwachungssysteme. Im Gebäudeautomationssystem werden Prozessgrössen - wie beispielsweise Raumklimagrössen oder Ereignisse - erfasst, ausgewertet, überwacht, beeinflusst oder generiert, wobei vorteilhafterweise durch das Gebäudeautomationssystem auch der Energieverbrauch des Gebäudes oder Areals optimiert wird.

Das Gebäudeautomationssystem umfasst und bedient in der Regel eine Vielzahl so genannter Feldgeräte wie Sensoren und Aktoren. Typische Feldgeräte sind hier beispielsweise Temperatur- und Feuchtefühler, Luftqualitätsfühler, Drucksensoren, Durchflussmesser, Elektrizitätszähler, Wärmezähler, Helligkeitsfühler, Brandmelder, Einbruchmelder, Alarm- oder Löscheinrichtungen, Antriebe für Heizwasserventile, Thermostatventile, Lüftungsklappen oder Jalousien, Lichtschalter, Chipkartenleser oder Einrichtungen zur Erfassung biometrische Daten. Das Gebäudeautomationssystem umfasst typischerweise auch eine Vielzahl Softwaremodule, - prozesse oder Programme, und zu deren Aktivierung im Allgemeinen mehrere Computer oder Prozessoren sowie in der Regel eine Vielzahl Steuer- und Regelgeräte sowie weitere Geräte, beispielsweise Geräte zur Anbindung des Gebäudeautomationssystems an externe Kommunikationsnetze, Bildschirme oder Geräte zur Analyse von Videosignalen.

Im weiteren wird in einem Gebäudeautomationssystem für den Datenaustausch einzelnen Geräten oder Anlagenteilen mindestens ein elektrisches oder drahtloses Kommunikationsmedium benutzt, in der Regel existieren mehrere Kommunikationsnetze, wobei je nach Bedarf Kabel, optische Datenkommunikationskanäle, Ultraschallverbindungen, elektromagnetische Nahfelder oder Funknetze einsetzbar sind, beispielsweise auch Glasfasernetze oder zellulare Telefonnetze. Für den genannten Datenaustausch einsetzbare Technologien oder Standards sind beispielsweise BACnet, LON oder LonWorks® der Firma ECHELON, der Europäische Installationsbus EIB, KONNEX, ZigBee oder der nach deutscher Norm DIN 19245 definierte PROFIBUS.

### Stand der Technik

Gebäudeautomationssysteme werden seit mehr als dreissig Jahren auf dem Markt angeboten. Nach der allgemeinen Verbreitung von Konzepten der objektorientierten Programmierung, werden seit mehr als fünfzehn Jahren auch Gebäudeautomationssysteme mit Hilfe von Konzepten der objektorientierten Programmierung entworfen, implementiert und angeboten.

Gebäudeautomationssysteme mit objektorientierter Softwarestruktur sind beispielsweise auch aus WO99/39276A und WO99/60487A bekannt.

Die Adressierung von Datenpunkten von Feldgeräten wird nach bekanntem Stand der Technik direkt in einem Regel- und/oder Steuerprogramm definiert. So werden beispielsweise BACnet Input, Output und Value Objekte in einem Programm typischerweise direkt adressiert. Sind in einem Gebäudeautomationssystem mehrere identische oder ähnliche Anwendungen vorhanden, beispielsweise mehrere Raumtemperatur-Regelprogramme, müssen die einzelnen Programme an die Feldgeräte angepasst werden. Falls das Gebäudeautomationssystem um zusätzliche Feldgeräte erweitert werden soll, beispielsweise weil die Raumaufteilung im Gebäude verändert werden soll, ist der Programmcode der beteiligten Regel- und/oder Steuerprogramme zur Integration der zusätzlichen Feldgeräte entsprechend anzupassen. Da der Programmcode eines Regel- oder Steuerprogramms typischerweise äusserst komplex aufgebaut ist, erfordern derartige Programmänderungen Personal mit fundierten Programmierkenntnissen.

Die US Patentanmeldung US2011/0087650A1 offenbart ein computerunterstütztes Verfahren und ein Computersystem zur Organisierung und Nutzung von Informationen in einem Gebäudemanagementsystem (Building Management System), wobei Objekte des Gebäudemanagementsystems über eine Kausalitätsbeziehungen (causal relationships) miteinander in Beziehung gestellt sind.

### Technische Aufgabe der Erfindung und Lösung

Der Erfindung liegt die Aufgabe zugrunde, ein Gebäudeautomationssystem so aufzubauen, dass dessen Struktur und Verhalten geeignet ist, Steuer- und/oder Regelprogramme mit einfachen Mitteln, beispielsweise mit einem Engineering Tool, an Feldgeräteadressen anzupassen, ohne dass ein Programmierer Anpassungen am Programmcode der Steuer- und/oder Regelprogramme vorzunehmen hat.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung mit Hilfe von Zeichnungen näher erläutert.

### Angaben zu den Zeichnungen

Die in der Zeichnung benutzte Darstellung ist an bekannte Funktionsblocktechnik angelehnt, die auch unter dem Begriff CFC (Continuous Function Chart) verbreitet ist.

Es zeigen:
Fig. 1, einen prinzipiellen, erfindungsgemässen Aufbau eines Gebäudeautomationssystems zur Bedienung eines Gebäudeabschnitts, und
Fig. 2, eine prinzipielle Darstellung zur Modellierung eines vom Gebäudeautomationssystem bedienbaren weiteren Gebäudeabschnitts, der mehrere Räume oder Zonen aufweist.

### Detaillierte Beschreibung der Erfindung

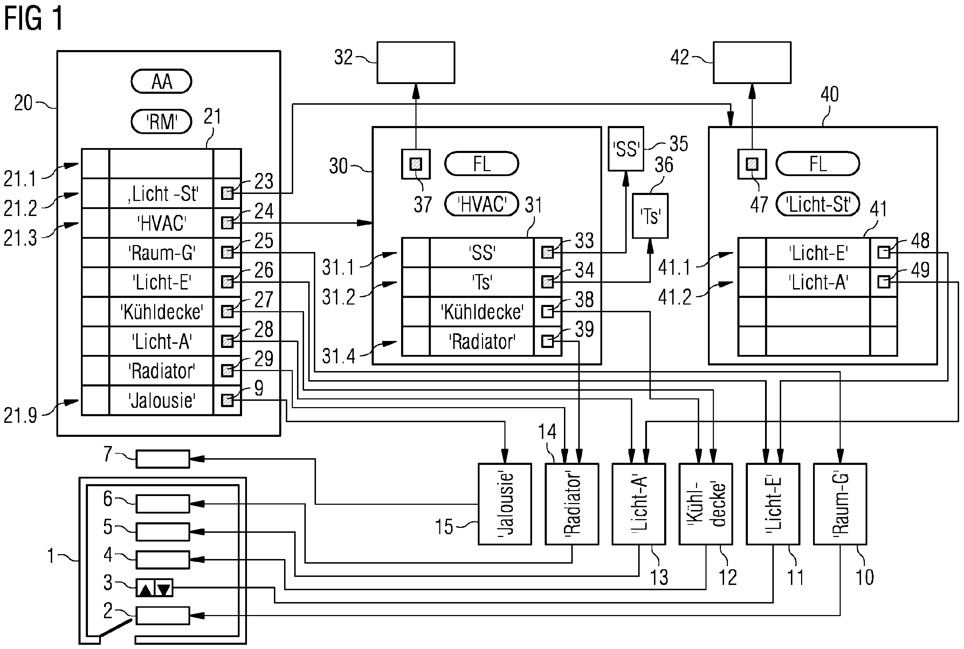

In der Fig. 1 ist ein Raum 1 ein von einem Gebäudeautomationssystem bedienbarer Gebäudeabschnitt. Dem Raum 1 sind mehrere Feldgeräte zugeordnet, mit deren Einsatz beispielsweise ein gewünschter Komfort für Benutzer und eine erforderliche Sicherheit für Benutzer und Infrastruktur bei optimierten Betriebskosten erreichbar sind. Beispielhaft sind dem Raum 1 ein Raumgerät 2, ein Lichtschalter 3, ein Kühlregister 4, ein Beleuchtungskörper 5, ein Heizregister 6 und ein Jalousieantrieb 7 zugeordnet. Das Raumgerät 2 dient als Benutzerschnittstelle zum Gebäudeautomationssystem, beispielsweise zur Eingabe eines Raumtemperatur-Sollbereichs und zur Anzeige der aktuellen Raumtemperatur sowie zur Anzeige einer Grössenordnung der Kosten der vom Raum 1 bezogenen Energie.

Die den Raum 1 bedienende Geräte werden vorteilhafterweise in der Software des Gebäudeautomationssystems so weit wie notwendig modelliert und entsprechende Modelle vorzugsweise mittels objektorientiertem Ansatz implementiert. Typischerweise werden die Modelle über Eingabe-/Ausgabe-Module an die Feldgeräte angeschlossen. Beispielhaft werden das Raumgerät 2 durch ein Raumgerätemodell 10, der Lichtschalter 3 durch ein Lichtschaltermodell 11, das Kühlregister 4 durch ein Kühlregistermodell 12, der Beleuchtungskörper 5 durch ein Beleuchtungskörpermodell 13, das Heizregister 6 durch ein Heizregistermodell 14 und der Jalousieantrieb 7 durch ein Jalousiemodell 15 im Gebäudeautomationssystem abgebildet.

Eine Übersicht über die Gesamtheit der Funktionalität der für den Raum 1 verfügbaren Automationsfunktionen ist in einem ersten Übersichtsknoten 20 festgehalten. Der erste Übersichtsknoten 20 ist ein Objekt des Gebäudeautomationssystems und weist eine Übersichtsliste 21 auf, die mindestens eine semantische Informationseinheit aufweist. Die semantische Informationseinheit identifiziert eine Automationsfunktion, die in dem vom ersten Übersichtsknoten 20 repräsentierten Raum 1 vorgesehen ist. Vorteilhafterweise enthält die semantische Informationseinheit mindestens eine zur Identifikation geeignete Bezeichnung und eine Relation zur betreffenden Automationsfunktion. Die Bezeichnung ist vorteilhafterweise vom Datentyp her eine Zeichenkette (String) mit fixer oder variabler Länge.

Eine bestimmte Beziehung zwei Knoten oder Objekten des Gebäudeautomationssystems wird in diesem Text mit dem Begriff Relation bezeichnet. Die Relation hat einen vordefinierten Typenbereich der mindestens zwei unterschiedlichen Relationsarten umfasst. Im vorliegenden Fall werden eine so genannte Kontaktiert-Relation und eine so genannte Besitzt-Relation definiert. Die Kontaktiert-Relation ist hier identisch mit der Relation mit einem Wert "kontaktiert" und bedeutet hier, dass diese Beziehung derart implementiert ist, dass die Beziehung für einen bidirektionalen Datenaustausch den betroffenen Knoten oder Objekten geeignet ist. Die Besitzt-Relation ist hier identisch mit der Relation mit dem Wert "besitzt" und bedeutet hier, dass diese Beziehung derart implementiert ist, dass die Beziehung einerseits für einen bidirektionalen Datenaustausch den betroffenen Knoten oder Objekten geeignet ist, andrerseits werden Knoten oder Objekte mit der Besitzt-Relation vorteilhafterweise existenziell derart aneinander gebunden, dass sie, beispielsweise mittels Engineering Tool, nur gemeinsam kopiert, verschoben und gelöscht werden können.

Die Übersichtsliste 21 umfasst im vorliegenden Ausführungsbeispiel Platz für neun semantische Informationseinheiten 21.1 bis 21.9.

Eine über eine Bezeichnung "HVAC" - also Heizen, Lüften und Kühlen - identifizierbare semantische Informationseinheit 21.3 weist eine Besitzt-Relation 24 auf, die dem ersten Übersichtsknoten 20 und einem zweite Übersichtsknoten 30 gilt.

Eine über eine Bezeichnung "Licht-St" - also Lichtsteuerung - identifizierbare semantische Informationseinheit 21.2 weist eine Besitzt-Relation 23 auf, die dem ersten Übersichtsknoten 20 und einem dritten Übersichtsknoten 40 gilt.

Eine über eine Bezeichnung "Raum-G" - also Raumgerät - identifizierbare semantische Informationseinheit weist eine Besitzt-Relation 25 auf, die dem ersten Übersichtsknoten 20 und dem Raumgerätemodell 10 gilt.

Eine über eine Bezeichnung "Licht-E" - also Lichteingang - identifizierbare semantische Informationseinheit weist eine Besitzt-Relation 26 auf, die dem ersten Übersichtsknoten 20 und dem Lichtschaltermodell 11 gilt.

Eine über eine Bezeichnung "Kühldecke" identifizierbare semantische Informationseinheit weist eine Besitzt-Relation 27 auf, die dem ersten Übersichtsknoten 20 und dem Kühlregistermodell 12 gilt.

Eine über eine Bezeichnung "Licht-A" - also Lichtausgang - identifizierbare semantische Informationseinheit weist eine Besitzt-Relation 28 auf, die zwischen dem ersten Übersichtsknoten 20 und dem Beleuchtungskörpermodell 13 gilt.

Eine über eine Bezeichnung "Radiator" identifizierbare semantische Informationseinheit weist eine Besitzt-Relation 29 auf, die zwischen dem ersten Übersichtsknoten 20 und dem Heizregistermodell 14 gilt.

Schliesslich weist eine über eine Bezeichnung "Jalousie" identifizierbare semantische Informationseinheit eine Besitzt-Relation 9 auf, die zwischen dem ersten Übersichtsknoten 20 und dem Jalousieantriebsmodell 15 gilt.

Eine Übersicht über eine mit "HVAC" - also Heizen, Lüften und Kühlen - bezeichnete Automationsfunktionalität ist im zweiten Übersichtsknoten 30 festgehalten. Der zweite Übersichtsknoten 30 ist ein Objekt des Gebäudeautomationssystems und weist eine Übersichtsliste 31 zur Speicherung von semantischen Informationseinheiten 31.1 bis 31.4 auf.

Eine über eine Bezeichnung "SS" - also Status - identifizierbare semantische Informationseinheit 31.1 weist eine Besitzt-Relation 33 auf, die zwischen dem zweiten Übersichtsknoten 30 und einer vorteilhafterweise als Objekt implementierten ersten Variable 35 gilt, in der beispielhaft aktuelle Information zum Betriebszustand der Automationsfunktionalität "HVAC" speicherbar ist.

Eine über eine Bezeichnung "Ts" - also Temperatursollwert - identifizierbare semantische Informationseinheit 31.2 weist eine Besitzt-Relation 34 auf, die zwischen dem zweiten Übersichtsknoten 30 und einer vorteilhafterweise als Objekt implementierten zweiten Variable 36 auf, in der beispielhaft der für die Automationsfunktionalität "HVAC" geltende Temperatursollwert "Ts" speicherbar ist.

Eine über eine Bezeichnung "Kühldecke" identifizierbare semantische Informationseinheit 31.3 weist eine Kontaktiert-Relation 38 auf, die zwischen dem zweiten Übersichtsknoten 30 und dem Kühlregistermodell 12 gilt.

Eine über eine Bezeichnung "Radiator" identifizierbare semantische Informationseinheit 31.4 weist eine Kontaktiert-Relation 39 auf, die zwischen dem zweiten Übersichtsknoten 30 und dem Heizregistermodell 14 gilt.

Der zweite Übersichtsknoten 30 weist eine weitere Besitzt-Relation 37 auf, die zwischen dem zweiten Übersichtsknoten 30 und einem Steuer- und/oder Regelprogramm 32 gilt. Im Steuer- und/oder Regelprogramm 32 ist die zum Heizen, Lüften und Kühlen des zugeordneten Gebäudeabschnitts erforderliche Automationsfunktion programmiert. Durch die besagte Besitzt-Relation 37 bilden das Steuer- und/oder Regelprogramm 32, der zweite Übersichtsknoten 30 und die weiteren durch Besitzt-Relation mit dem Übersichtsknoten 30 verbundenen Objekte 35 und 36 eine funktionale Einheit. Durch die Wirkungsmöglichkeit der verfügbaren Relationen wird ein Zugriff zum Lesen und Schreiben von Daten, zwischen dem Steuer- und/oder Regelprogramm 32 einerseits und über Relationen mit dem Übersichtsknoten 30 verbundenen Objekten andrerseits, indirekt über den Übersichtsknoten 30 ermöglicht. Die beschriebene Struktur der funktionalen Einheit ermöglicht das Einbinden und Austauschen von Feldgeräten in das Gebäudeautomationssystem, ohne dass dazu Programmcode im betroffenen Steuer- und/oder Regelprogramm 32 angepasst werden müsste.

Eine Übersicht über eine mit "Licht-St" - also Lichtsteuerung - bezeichnete Automationsfunktionalität ist im dritten Übersichtsknoten 40 festgehalten. Der dritte Übersichtsknoten 40 ist ein Objekt des Gebäudeautomationssystems und weist eine Übersichtsliste 41 zur Speicherung von semantischen Informationseinheiten 41.1 bis 41.4 auf.

Eine über eine Bezeichnung "Licht-E" - also Lichteingang - identifizierbare semantische Informationseinheit 41.1 weist eine Kontaktiert-Relation 38 auf, die zwischen dem dritten Übersichtsknoten 40 und dem Lichtschaltermodell 11 gilt.

Eine über eine Bezeichnung "Licht-A" - also Lichtausgang - identifizierbare semantische Informationseinheit 41.2 weist eine Kontaktiert-Relation 39 auf, die zwischen dem dritten Übersichtsknoten 40 und dem Beleuchtungskörpermodell 13 gilt.

Der dritte Übersichtsknoten 40 weist eine Besitzt-Relation 47 auf, die zwischen dem dritten Übersichtsknoten 40 und einem Steuer- und/oder Regelprogramm 42 gilt. Im Steuer- und/oder Regelprogramm 42 ist die zur Lichtsteuerung im zugeordneten Gebäudeabschnitt erforderliche Automationsfunktion programmiert. Durch die besagte Besitzt-Relation 47 bilden das Steuer- und/oder Regelprogramm 42 und der dritte Übersichtsknoten 40 eine funktionale Einheit. Durch die Wirkungsmöglichkeit der verfügbaren Relationen wird ein Zugriff zum Lesen und Schreiben von Daten, zwischen dem Steuer- und/oder Regelprogramm 42 einerseits und über Relationen mit dem dritten Übersichtsknoten 40 verbundenen Objekten andrerseits, indirekt über den Übersichtsknoten 40 ermöglicht. Die beschriebene Struktur der funktionalen Einheit ermöglicht das Einbinden und Austauschen von Feldgeräten in das Gebäudeautomationssystem, ohne dass dazu Programmcode im betroffenen Steuer- und/oder Regelprogramm 42 angepasst werden müsste.

Die in der Übersichtsliste 21, 31 oder 41 abgespeicherte semantischen Informationseinheiten sind vorteilhafterweise über vordefinierte oder standardisierte Bezeichnungen identifizierbar. Dadurch können Bediensichten, beispielsweise für eine Leitstelle oder Managementsystem des Gebäudeautomationssystems, benutzerfreundlich und mit relativ wenig Aufwand generiert werden. Durch den Einsatz vordefinierter Bezeichnungen mittels Datentyp Zeichenkette oder String für die semantischen Informationseinheiten ist ein aktuell installiertes Gebäudeautomationssystem mit relativ wenig Aufwand dokumentierbar.

In einer Ausführungsvariante des Übersichtsknotens 20, 30 oder 40 wird die Übersichtsliste 21, 31 oder 41 nach gewissen Regeln geordnet oder sortiert.

Mit Vorteil werden Gerätemodelle mit einer Bezeichnung versehen, die bei einem Generieren oder Überprüfen einer Relation verwertbar ist. Wenn etwa, wie in der Fig. 1 dargestellt, die semantische Informationseinheit 21.9 der dem Raum 1 zugeordneten Übersichtsliste 21 mit der Zeichenkette "Jalousie" bezeichnet ist, und auch das entsprechende Jalousieantriebsmodell 15 mit der gleichen Bezeichnung markiert ist, wird das Generieren oder Überprüfen der Besitzt-Relation 9 vereinfacht und automatisierbar.

Durch den Einsatz einer Markierung mit dem Datentyp Zeichenkette oder String in einem Gerätemodell, wird die selbsttätige Anbindung des Gerätemodells an die dazugehörige Funktionseinheit über den entsprechenden Übersichtsknoten ermöglicht, ohne dass der Programmcode im zugeordneten Steuer- und/oder Regelprogramm zu verändern ist.

Entsprechend dem Aufbau eines Gebäudes sind die durch das Gebäudeautomationssystem zu bedienenden Gebäudeabschnitte typischerweise in Räume mit - unter Umständen - sehr unterschiedlichen Anforderungen, oder durch ein Raster in Rasterelemente mit ähnlichen oder gleichartigen Anforderungen aufteilbar. In einer vorteilhaften Modellierung von Räumen und Rasterelementen werden vorteilhafterweise Übersichtsknoten eingesetzt. Rasterelemente ergeben sich beispielweise durch eine Anordnung von Tragstützen oder Fensterstrukturen im Gebäudeabschnitt. Eine flexible Modellierung eines Gebäudes wird durch die Verwendung von zwei unterschiedlichen Typen von Übersichtsknoten erreicht, einem ersten Typ für einen Raum und einen zweiten Typ für Rasterelemente. Übersichtsknoten des für einen Raum ausgelegten Typs sind in der Zeichnung beispielhaft mit "RM", also Raum markiert, Übersichtsknoten des für Rasterelemente ausgelegten Typs mit "GD", also Grid oder Rasterelement. Der in der Fig. 1 dargestellte Übersichtsknoten 20 für den Raum 1 ist entsprechend vom Typ "RM".

Übersichtsknoten vom Typ "GD" können dynamisch mit einem Übersichtsknoten des Typs "RM" verbunden werden.

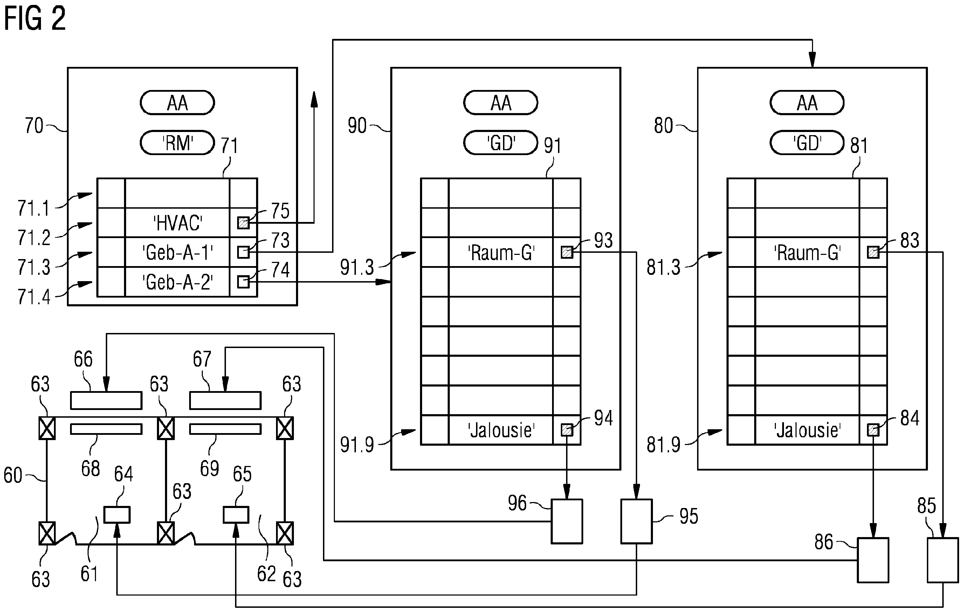

In der Fig. 2 ist mit 60 ein gerasterter Gebäudeabschnitt bezeichnet, der ein erstes Rasterelement 62 und ein zweites Rasterelement 61 aufweist. Die Rasterung des Gebäudeabschnitts 60 ist hier beispielhaft durch Tragstützen 63 gegeben. Die den beiden Rasterelementen 62 und 61 zugeordneten Geräte sind hier zur Vereinfachung auf ein Minimum reduziert, da lediglich das Prinzip der vorteilhaften Modellierung darzustellen ist. Das Rasterelement 62 bzw. 61 umfasst also ein Raumgerät 65 bzw. 64, ein Heizregister 69 bzw. 68, und einen Jalousieantrieb 67 bzw. 66.

Die das Rasterelement 62 bzw. 61 bedienende Geräte werden vorteilhafterweise in der Software des Gebäudeautomationssystems so weit wie notwendig modelliert und entsprechende Modelle vorzugsweise mittels objektorientiertem Ansatz implementiert. Typischerweise werden die Modelle über Eingabe-/Ausgabe-Module an die Feldgeräte angeschlossen. Beispielhaft werden das Raumgerät 65 oder 64 durch ein Raumgerätemodell 85 bzw. 95 und der Jalousieantrieb 67 oder 66 durch ein Jalousiemodell 86 bzw. 96 im Gebäudeautomationssystem abgebildet.

Ein vierter Übersichtsknoten 70 des Typs "RM", also Raum, beschreibt den Gebäudeabschnitt 60 der die beiden Rasterelemente 62 bzw. 61 umfasst. Der vierte Übersichtsknoten 70 weist eine Übersichtsliste 71 zur Speicherung von semantischen Informationseinheiten 71.1, 71.2, 71.3 und 71.4 auf. Eine mit der Bezeichnung "HVAC" - also Heizen, Lüften und Kühlen - identifizierbare semantische Informationseinheit 71.2 weist eine Besitzt-Relation 75 auf, die zwischen dem vierten Übersichtsknoten 70 und einer nicht dargestellten Funktionseinheit, durch welche beispielhaft die Funktionalität Heizen, Lüften und Kühlen für den ganzen Gebäudeabschnitt 60 gewährleistet ist. Im weiteren umfasst die Übersichtsliste 71 eine mit der Bezeichnung "Geb-A-1" identifizierbare semantische Einheit 71.3 und eine mit der Bezeichnung "Geb-A-2" identifizierbare semantische Einheit 71.4.

Eine aktuelle Rasterung des Gebäudeabschnitts 60 ist mittels semantischer Informationseinheiten der Übersichtsliste 71 festgehalten. Die semantische Informationseinheit 71.3 weist ein Kontaktiert-Relation 73 auf, die zwischen dem den Gebäudeabschnitt 60 beschreibenden vierten Übersichtsknoten 70 und einem fünften Übersichtsknoten 80 gilt. Die semantische Informationseinheit 71.4 weist ein Kontaktiert-Relation 74 auf, die zwischen dem vierten Übersichtsknoten 70 und einem sechsten Übersichtsknoten 90 gilt.

Der fünfte Übersichtsknoten 80 und der sechste Übersichtsknoten 90 sind vom Typ "GD", also Grid oder Rasterelement. Entsprechend dem ersten Übersichtsknoten 20 in der Fig. 1, der die Gesamtheit der speziell für den Raum 1 verfügbaren Automationsfunktionen beschreibt, wird die Gesamtheit der speziell für das erste Rasterelement 62 verfügbaren Automationsfunktionen im fünften Übersichtsknoten 80, und die Gesamtheit der speziell für das zweite Rasterelement 61 verfügbaren Automationsfunktionen im sechsten Übersichtsknoten 90 aufgeführt. Auf das erste Rasterelement 62 bezogene semantische Information ist in der Übersichtsliste 81 im fünften Übersichtsknoten 89 festgehalten. Dem entsprechend ist auf das zweite Rasterelement 61 bezogene semantische Information in der Übersichtsliste 91 im sechsten Übersichtsknoten 90 festgehalten.

Die Struktur und deren Wirkungsweise, welche durch die Verwendung der vorgeschlagenen Übersichtsknoten, Übersichtslisten, Relationen und Funktionseinheiten ermöglicht werden, ergeben in den Phasen Engineering, Inbetriebnahme und Unterhalt insbesondere folgende Vorteile: Knoten sind beim Engineering kopierbar, Relationen sind mit Hilfe geeigneter Bezeichnungen von einem Engineering-Tool oder zur Laufzeit selbsttätig überprüfbar, Feldgeräte, Raster und Umfang der verfügbaren Funktionalität von Gebäudeabschnitten sind veränderbar, ohne dass Änderungen am Programmcode von Steuer- und/oder Regelprogrammen vorzunehmen sind, da die Regel- und/oder Steuerprogramme indirekt via Übersichtsknoten auf Feldgeräte zugreifen.

### Bezugszeichen

- 1: Raum
- 2: Raumgerät
- 3: Lichtschalter
- 4: Kühlregister
- 5: Beleuchtungskörper
- 6: Heizregister
- 7: Jalousieantrieb

- 9: Besitzt-Relation, achte
- 10: Raumgerätemodell
- 11: Lichtschaltermodell
- 12: Kühlregistermodell
- 13: Beleuchtungskörpermodell
- 14: Heizregistermodell
- 15: Jalousieantriebsmodell

- 20: Übersichtsknoten, erster
- 21: Übersichtsliste
- 21.1 .. 21.9: semantische Informationseinheit

- 23: Besitzt-Relation, erste
- 24: Besitzt-Relation, zweite
- 25: Besitzt-Relation, dritte
- 26: Besitzt-Relation, vierte
- 27: Besitzt-Relation, fünfte
- 28: Besitzt-Relation, sechste
- 29: Besitzt-Relation, siebte
- 30: Übersichtsknoten, zweiter
- 31: Übersichtsliste
- 31.1 .. 31.4: semantische Informationseinheit
- 32: Steuer- und/oder Regelprogramm
- 33: Besitzt-Relation,
- 34: Besitzt-Relation,
- 35: Variable, erste
- 36: Variable, zweite
- 37: Besitzt-Relation,
- 38: Kontaktiert-Relation
- 39: Kontaktiert-Relation
- 40: Übersichtsknoten, dritter
- 41: Übersichtsliste
- 41.1 .. 41.2: semantische Informationseinheit
- 42: Steuer- und/oder Regelprogramm

- 47: Besitzt-Relation,
- 48: Kontaktiert-Relation
- 49: Kontaktiert-Relation

- 60: Gebäudeabschnitt
- 61: Rasterelement, zweites
- 62: Rasterelement, erstes
- 63: Tragstütze
- 64: Raumgerät
- 65: Raumgerät
- 66: Jalousieantrieb
- 67: Jalousieantrieb
- 68: Heizregister
- 69: Heizregister
- 70: Übersichtsknoten, vierter
- 71: Übersichtsliste
- 71.1 .. 71.4: semantische Informationseinheit

- 73: Kontaktiert-Relation
- 74: Kontaktiert-Relation
- 75: Besitzt-Relation

- 80: Übersichtsknoten, fünfter
- 81: Übersichtsliste
- 81.3 .. 81.9: semantische Informationseinheit

- 83: Besitzt-Relation
- 84: Besitzt-Relation
- 85: Raumgerätemodell
- 86: Jalousieantriebsmodell

- 90: Übersichtsknoten, sechster
- 91: Übersichtsliste
- 91.3 .. 91.9: semantische Informationseinheit

- 93: Besitzt-Relation
- 94: Besitzt-Relation
- 95: Raumgerätemodell
- 96: Jalousieantriebsmodell

## Patentansprüche

1. Anordnung zur Adressierung von Feldgeräten (2..7) eines Gebäudeautomations-systems zur Automatisierung eines Gebäudes oder eines mehrere Gebäude umfassenden Areals, **gekennzeichnet durch**
wenigstens ein einen Gebäudeabschnitt (1; 62; 61) beschreibendes Objekt (20; 80; 90) und
wenigstens eine funktionale Einheit (30, 32, 35, 36; 40, 42) zum Einbinden und Austauschen von Feldgeräten (2..7) in das Gebäudeautomationssystem, ohne dass dazu Programmcode im betroffenen Steuer- und/oder Regelprogramm (32, 42) angepasst werden muss,
wobei die funktionale Einheit (30, 32, 35, 36; 40,42) umfasst:
ein eine Automationsfunktion (HVAC; Licht-St) beschreibendes Objekt (30; 40);
ein Objekt (35) zur Speicherung des Betriebszustandes der Automationsfunktion (HVAC; Licht-St);
ein Objekt (36) zur Speicherung eines Sollwertes der Automationsfunktion (HVAC; Licht-St); und
ein Steuer- und/oder Regelprogramm (32; 42);
wobei die funktionale Einheit (30, 32, 35, 36; 40,42) durch eine Besitzt-Relation (37, 47) zwischen dem eine Automationsfunktion (HVAC; Licht-St) beschreibenden Objekt (30; 40) und dem jeweiligen Steuer- und/oder Regelprogramm (32; 42) gebildet ist; und
wobei die funktionale Einheit (30, 32, 35, 36; 40,42) weiterhin durch eine Besitzt-Relation (33) des die jeweilige Automationsfunktion (HVAC; Licht-St) beschreibenden Objektes (30; 40) mit dem Objekt (35) zur Speicherung des Betriebszustandes der Automations-funktion (HVAC; Licht-St) und durch eine Besitzt-Relation (34) des die jeweilige Automationsfunktion (HVAC; Licht-St) beschreibenden Objektes (30; 40) mit dem Objekt (36) zur Speicherung eines Sollwertes der Automationsfunktion (HVAC; Licht-St) gebildet ist;
wobei das wenigstens eine einen Gebäudeabschnitt (1; 62; 61) beschreibende Objekt (20; 80; 90) eine Übersichtsliste (21; 81; 91) aufweist, in der semantische Informationseinheiten (21.2..21.9; 81.3, 81.9; 91.3, 91.9) zum betreffenden Gebäudeabschnitt (1; 62; 61) speicherbar sind,
wobei eine der semantischen Informationseinheiten (21.2..21.9; 81.3, 81.9; 91.3, 91.9) eine der Automationsfunktionen (HVAC; Licht-St) identifiziert, die im Gebäudeabschnitt (1; 62; 61) vorgesehen sind und die durch eines der eine Automationsfunktion (HVAC; Licht-St) beschreibenden Objekte (30; 40) der wenigstens einen funktionalen Einheit beschrieben wird,
wobei das wenigstens eine die jeweilige Automationsfunktion (HVAC; Licht-St) beschreibende Objekt (30; 40) eine Übersichtsliste (31; 41) aufweist, in der entsprechende semantische Informationseinheiten (31.1 bis 31.4; 41.1, 41.2) zur betreffenden Automationsfunktion (HVAC; Licht-St) speicherbar sind,
wobei jede der semantischen Informationseinheiten (21.2..21.9; 31.1 bis 31.4; 41.1, 41.2; 81.3, 81.9; 91.3, 91.9) wenigstens eine Bezeichnung zur Identifikation der jeweiligen semantischen Informationseinheit (21.2..21.9; 31.1 bis 31.4; 41.1, 41.2; 81.3, 81.9; 91.3, 91.9) und eine Relation (9, 23-29, 33; 34; 38; 39; 48; 49) aufweist,
wobei jede Relation (9, 23-29, 33, 34, 38, 39; 48, 49) eine Beziehungsart des entsprechenden Objekts (20, 30, 40, 80, 90) zu einem weiteren Objekt (10-15, 30, 40, 35, 36) festlegt,
wobei jede Relation einen vordefinierten Typenbereich mit mindestens zwei unterschiedlichen Relationsarten aufweist und genau einem dieser Relationsarten entspricht, wobei der vordefinierte Typenbereich eine erste Relationsart als Kontaktiert-Relation und eine zweite Relationsart als Besitzt-Relation umfasst,
wobei jede der semantischen Informationseinheiten (21.2..21.9) des wenigstens einen einen Gebäudeabschnitt (1; 62; 61) beschreibenden Objektes (20; 80; 90) entweder über eine jeweilige Besitzt-Relation (23, 24) auf eines der eine Automationsfunktion (HVAC; Licht-St) beschreibenden Objekte (30; 40) oder über eine jeweilige Besitzt-Relation (9, 25..29) auf ein Modell (10..15) eines der Feldgeräte (2..7) verweist,
wobei jede der semantischen Informationseinheiten (31.1 bis 31.4, 41,1, 41.2) des wenigstens einen eine Automationsfunktion (HVAC; Licht-St) beschreibenden Objektes (30; 40) entweder über eine Besitzt-Relation (33) auf das Objekt (35) zur Speicherung des Betriebszustandes der Automationsfunktion (HVAC; Licht-St) oder über eine Besitzt-Relation (34) auf das Objekt (36) zur Speicherung eines Sollwertes der Automationsfunktion (HVAC) verweist, oder über eine Kontaktiert-Relation (38, 39; 48, 49) auf eines der Modelle (11..14) eines der Feldgeräte (2..7) verweist;
wobei die jeweilige Relation (33; 34; 38; 39; 48; 49) des einen eine Automationsfunktion (HVAC; Licht-St) beschreibenden Objektes (30; 40) der wenigstens einen funktionalen Einheit derart implementiert ist, dass ein bidirektionaler Datenaustausch zwischen dem entsprechenden die semantische Informationseinheit aufweisenden Objekt (30; 40) und einem entsprechenden weiteren Objekt (35; 36) oder Modell (11..14) eines der Feldgeräte (2..7) ermöglicht wird; wobei die Objekte (30, 32, 35, 36; 40,42) der wenigstens einen funktionalen Einheit (30, 32, 35, 36; 40,42) durch jeweilige Besitzt-Relationen (37, 47; 33, 34) existenziell derart aneinander gebunden sind, dass sie nur gemeinsam kopiert, verschoben und gelöscht werden können,
wobei durch die Wirkungsmöglichkeit der verfügbaren Relationen (37, 47) ein Zugriff zum Lesen und Schreiben von Daten, zwischen dem Steuer- und/oder Regelprogramm (32, 42) einerseits und über Relationen (38, 39, 48, 49) mit dem eine Automationsfunktion (HVAC; Licht-St) beschreibenden Objekt (30, 40) verbundenen Objekten andrerseits, indirekt über das eine Automationsfunktion (HVAC; Licht-St) beschreibende Objekt (30, 40) ermöglicht ist.

2. Anordnung nach Anspruch 1, **dadurch gekennzeichnet, dass** die Übersichtsliste (21, 71) des den Gebäudeabschnitt (1; 60) beschreibenden Objekts (20; 70) eine semantische Informationseinheit (71.3; 71.4) mit einer Relation (73; 74) auf ein weiteres einen Gebäudeabschnitt (62; 61) beschreibendes Objekt (80; 90) aufweist.

3. Anordnung nach einem der vorangehenden Ansprüche, **dadurch gekennzeichnet, dass** der Datentyp der Bezeichnung der semantischen Informationseinheit eine Zeichenkette ist.

4. Anordnung nach einem der Ansprüche 1 bis 3, **dadurch gekennzeichnet, dass** die Anordnung durch ein Engineeringtool zur Anpassung von Feldgeräteadressen in einem Gebäudeautomationssystems anpassbar ist.

5. Gebäudeautomationssystem, umfassend:
- ein Kommunikationsmedium für den Datenaustausch zwischen einzelnen Geräten, insbesondere Feldgeräten (2..7; 64,.69), oder Anlagenteilen, und
- eine Anordnung nach einem der Ansprüche 1 bis 3.

## Claims

1. Arrangement for addressing field devices (2..7) in a building automation system for automating a building or a campus comprising a number of buildings, **characterised by**
at least one object (20; 80; 90) describing a building section (1; 62; 61) and
at least one functional unit (30, 32, 35, 36; 40, 42) for incorporating into and replacing field devices (2..7) in the building automation system, without program code in the open-loop and/or closed-loop control program (32, 42) concerned having to be adapted,
wherein the functional unit (30, 32, 35, 36; 40, 42) comprises:
an object (30; 40) describing an automation function (HVAC; Licht-St),
an object (35) for storing the operating state of the automation function (HVAC; Licht-St);
an object (35) for storing a target value of the automation function (HVAC; Licht-St); and
an open-loop and/or closed-loop control program (32; 42);
wherein the functional unit (30, 32, 35, 36; 40, 42) is formed by an owns relation (37, 47) between the object (30; 40) describing an automation function (HVAC; Licht-St) and the respective open-loop and/or closed-loop control program (32; 42); and
wherein the functional unit (30, 32, 35, 36; 40, 42) is furthermore formed by an owns relation (33) of the object (30; 40) describing the respective automation function (HVAC; Licht-St) with the object (35) for storing the operating state of the automation function (HVAC; Licht-St) and by an owns relation (34) of the object (30; 40) describing the respective automation function (HVAC; Licht-St) with the object (36) for storing a target value of the automation function (HVAC; Licht-St);
wherein the at least one object (20; 80; 90) describing a building section (1; 62; 61) has an overview list (21; 81; 91) in which semantic information units (21.2..21.9; 81.3, 81.9; 91.3, 91.9) for the building section (1; 62; 61) concerned are able to be stored,
wherein one of the semantic information units (21.2..21.9; 81.3, 81.9; 91.3, 91.9) identifies one of the automation functions (HVAC; Licht-St) which are provided in the building section (1; 62; 61) and which is described by one of the objects (30; 40) of the at least one functional unit describing an automation function (HVAC; Licht-St),
wherein the at least one object (30; 40) describing the respective automation function (HVAC; Licht-St) has an overview list (31; 41) in which corresponding semantic information units (31.1 to 31.4; 41.1, 41.2) for the automation function (HVAC; Licht-St) concerned are able to be stored,
wherein each of the semantic information units (21.2..21.9; 31.1 to 31.4; 41.1, 41.2; 81.3, 81.9; 91.3, 91.9) has at least one identifier for identifying the respective semantic information unit (21.2..21.9; 31.1 to 31.4; 41.1, 41.2; 81.3, 81.9; 91.3, 91.9) and a relation (9, 23-29, 33; 34; 38; 39; 48; 49),
wherein each relation (9, 23-29, 33, 34, 38, 39; 48, 49) defines a type of relation of the corresponding object (20, 30, 40, 80, 90) to a further object (10-15, 30, 40, 35, 36),
wherein each relation has a predefined type range with at least two different relation types and corresponds to precisely one of these relation types, wherein the predefined type range comprises a first relation type as a contacts relation and a second relation type as an owns relation,
wherein each of the semantic information units (21.2.. 21.9) of the at least one object (20; 80; 90) describing a building section (1; 62; 61) refers either to one of the objects (30; 40) describing an automation function (HVAC; Licht-St) by way of a respective owns relation (23, 24) or to a model (10..15) of one of the field devices (2..7) by way of a respective owns relation (9, 25..29),
wherein each of the semantic information units (31.1 to 31.4, 41.1, 41.2) of the at least one object (30; 40) describing an automation function (HVAC; Licht-St) refers either to the object (35) for storing the operating state of the automation function (HVAC; Licht-St) by way of an owns relation (33) or to the object (36) for storing a target value of the automation function (HVAC) by way of an owns relation (34) or to one of the models (11..14) of one of the field devices (2..7) by way of a contacts relation (38, 39; 48, 49);
wherein the respective relation (33; 34; 38; 39; 48; 49) of the one object (30; 40), describing an automation function (HVAC; Licht-St), of the at least one functional unit is implemented such that a bidirectional data exchange is made possible between the corresponding object (30; 40) having the semantic information unit and a corresponding further object (35; 36) or model (11..14) of one of the field devices (2..7);
wherein the objects (30, 32, 35, 36; 40, 42) of the at least one functional unit (30, 32, 35, 36; 40, 42) are existentially linked to one another by means of respective owns relations (37, 47; 33, 34) such that they can only be copied, moved and deleted together,
wherein through the action option of the available relations (37, 47), an access for reading and writing of data between the open-loop and/or closed-loop control program (32, 42) on the one hand, and via relations (38, 39, 48, 49) with objects connected to the object (30, 40) describing an automation function (HVAC; Licht-St) on the other hand, is made possible indirectly via the object (30, 40) describing an automation function (HVAC; Licht-St).

2. Arrangement according to claim 1, **characterised in that** the overview list (21, 71) of the object (20; 70) describing the building section (1; 60) has a semantic information unit (71.3; 71.4) with a relation (73; 74) to a further object (80; 90) describing a building section (62; 61).

3. Arrangement according to one of the preceding claims, **characterised in that** the data type of the identifier of the semantic information unit is a character string.

4. Arrangement according to one of claims 1 to 3, **characterised in that** the arrangement can be adapted by means of an engineering tool for adapting field device addresses in a building automation system.

5. Building automation system, comprising:
- a communication medium for the data exchange between individual devices, in particular field devices (2..7; 64,. 69) or system parts, and
- an arrangement according to one of claims 1 to 3.

## Revendications

1. Dispositif d'adressage d'appareils de terrain (2..7) d'un système d'automatisation d'un bâtiment, destiné à automatiser un bâtiment ou une zone comprenant plusieurs bâtiments, **caractérisé par**
au moins un objet (20 ; 80 ; 90) décrivant une section de bâtiment (1 ; 62 ; 61) et
au moins une unité fonctionnelle (30, 32, 35, 36 ; 40, 42) destinée à intégrer et échanger des appareils de terrain (2..7) dans le système d'automatisation du bâtiment sans avoir à adapter pour cela le code de programme dans le programme de commande et/ou de régulation (32, 42) concerné,
l'unité fonctionnelle (30, 32, 35, 36 ; 40, 42) comprenant :
un objet (30 ; 40) décrivant une fonction d'automatisation (HVAC ; Licht-St) ;
un objet (35) destiné à mémoriser l'état de fonctionnement de la fonction d'automatisation (HVAC ; Licht-St) ;
un objet (36) destiné à mémoriser une consigne de la fonction d'automatisation (HVAC ; Licht-St) ; et
un programme de commande et/ou de régulation (32 ; 42) ;
l'unité fonctionnelle (30, 32, 35, 36 ; 40, 42) étant formée par une relation de possession (37, 47) entre l'objet (30 ; 40) décrivant une fonction d'automatisation (HVAC ; Licht-St) et le programme de commande et/ou de régulation (32 ; 42) respectif ; et
l'unité fonctionnelle (30, 32, 35, 36 ; 40, 42) étant formée en outre par une relation de possession (33) entre l'objet (30 ; 40) décrivant la fonction d'automatisation respective (HVAC ; Licht-St) et l'objet (35) destiné à mémoriser l'état de fonctionnement de la fonction d'automatisation (HVAC ; Licht-St) et par une relation de possession (34) entre l'objet (30 ; 40) décrivant la fonction d'automatisation respective (HVAC ; light-St) et l'objet (36) destiné à mémoriser une consigne de la fonction d'automatisation (HVAC ; Licht-St) ;
l'au moins un objet (20 ; 80 ; 90) décrivant une section de bâtiment (1 ; 62 ; 61) présentant une liste générale (21 ; 81 ; 91) dans laquelle des unités d'information sémantique (21.2..21.9 ; 81.3, 81.9 ; 91.3, 91.9) peuvent être mémorisées pour la section de bâtiment concernée (1 ; 62 ; 61),
une des unités d'information sémantique (21.2..21.9 ; 81.3, 81.9 ; 91.3, 91.9) identifiant une des fonctions d'automatisation (HVAC ; Licht-St), qui sont prévues dans la section de bâtiment (1 ; 62 ; 61) et qui sont décrites par un des objets (30 ; 40) décrivant une fonction d'automatisation (HVAC ; Licht-St) de l'au moins une unité fonctionnelle,
l'au moins un objet (30 ; 40) décrivant la fonction d'automatisation respective (HVAC ; Licht-St) présentant une liste générale (31 ; 41) dans laquelle des unités d'information sémantique correspondantes (31.1 à 31.4 ; 41.1, 41.2) peuvent être mémorisées pour la fonction d'automatisation concernée (HVAC ; Licht-St),
chacune des unités d'information sémantique (21.2..21.9 ; 31.1 à 31.4 ; 41.1, 41.2 ; 81.3, 81.9 ; 91.3, 91.9) présentant au moins une désignation destinée à identifier l'unité d'information sémantique respective (21.2..21.9 ; 31.1 à 31.4 ; 41.1, 41.2 ; 81.3, 81.9 ; 91.3, 91.9) et une relation (9, 23-29, 33 ; 34 ; 38 ; 39 ; 48 ; 49),
chaque relation (9, 23-29, 33, 34, 38, 39 ; 48, 49) définissant un type de relation de l'objet correspondant (20, 30, 40, 80, 90) avec un autre objet (10-15, 30, 40, 35, 36),
chaque relation présentant une plage de types prédéfinie avec au moins deux types de relations différents et correspondant exactement à l'un de ces types de relations, la plage de types prédéfinie comprenant un premier type de relation comme relation de contact et un second type de relation comme relation de possession,
chacune des unités d'information sémantique (21.2..21.9) de l'au moins un objet (20 ; 80 ; 90) décrivant une section de bâtiment (1 ; 62 ; 61) renvoyant soit à l'un des objets (30 ; 40) décrivant une fonction d'automatisation (HVAC ; Licht-St) par le biais d'une relation de possession respective (23, 24) soit à un modèle (10..15) d'un des appareils de terrain (2..7) par le biais d'une relation de possession respective (9, 25..29),
chacune des unités d'information sémantique (31.1 à 31.4, 41.1, 41.2) de l'au moins un objet (30 ; 40) décrivant une fonction d'automatisation (HVAC ; Licht-St) renvoyant soit à l'objet (35) destiné à mémoriser l'état de fonctionnement de la fonction d'automatisation (HVAC ; Licht-St) par le biais d'une relation de possession (33) soit à l'objet (36) destiné à mémoriser une consigne de la fonction d'automatisation (HVAC) par le biais d'une relation de possession (34), ou renvoyant à l'un des modèles (11..14) de l'un des appareils de terrain (2..7) par le biais d'une relation de contact (38, 39 ; 48, 49) ;
la relation respective (33 ; 34 ; 38 ; 39 ; 48 ; 49) de l'objet (30 ; 40) décrivant une fonction d'automatisation (HVAC ; Licht-St) de l'au moins une unité fonctionnelle est mise en œuvre de manière à permettre un échange de données bidirectionnel entre l'objet correspondant (30 ; 40) présentant l'unité d'information sémantique et un autre objet (35 ; 36) ou modèle (11 .. 14) correspondant d'un des appareils de terrain (2..7) ;
les objets (30, 32, 35, 36 ; 40, 42) de l'au moins une unité fonctionnelle (30, 32, 35, 36 ; 40, 42) étant existentiellement liés les uns aux autres par des relations de possession respectives (37, 47 ; 33, 34) de sorte qu'ils ne peuvent être copiés, déplacés et supprimés qu'ensemble,
la possibilité d'action des relations disponibles (37, 47) permettant d'accéder en lecture et en écriture aux données entre le programme de commande et/ou de régulation (32, 42) d'une part et les objets reliés par le biais de relations (38, 39, 48, 49) à l'objet (30, 40) décrivant une fonction d'automatisation (HVAC ; Licht-St) d'autre part, indirectement par le biais de l'objet (30, 40) décrivant une fonction d'automatisation (HVAC ; Licht-St).

2. Dispositif selon la revendication 1, **caractérisé en ce que** la liste générale (21, 71) de l'objet (20 ; 70) décrivant la section de bâtiment (1 ; 60) présente une unité d'information sémantique (71.3 ; 71.4) avec une relation (73, 74) à un autre objet (80 ; 90) décrivant une section de bâtiment (62 ; 61).

3. Dispositif selon l'une des revendications précédentes, **caractérisé en ce que** le type de données de la désignation de l'unité d'information sémantique est une chaîne de caractères.

4. Dispositif selon l'une des revendications 1 à 3, **caractérisé en ce que** le dispositif peut être adapté par un outil d'ingénierie destiné à adapter les adresses d'appareils de terrain dans un système d'automatisation d'un bâtiment.

5. Système d'automatisation d'un bâtiment, comprenant :
- un support de communication pour l'échange de données entre différents appareils, en particulier des appareils de terrain (2..7 ; 64, 69) ou des parties d'installation, et
- un dispositif selon l'une des revendications 1 à 3.
